# EUROPÄISCHE PATENTSCHRIFT

(11) **EP 1 565 885 B1**
(45) Veröffentlichungstag und Bekanntmachung des Hinweises auf die Patenterteilung: **29.07.2009**
(21) Anmeldenummer: 03776898.3
(22) Anmeldetag: 12.11.2003
(51) Int. Cl.: G06T 7/00, G06T 7/60

(54) **VERFAHREN ZUM ERFASSEN EINER EIGENSCHAFT MINDESTENS EINES GEGENSTANDS**
METHOD FOR RECORDING A CHARACTERISTIC OF AT LEAST ONE OBJECT
PROCEDE POUR SAISIR UNE PROPRIETE D'AU MOINS UN OBJET

(30) Priorität: 25.11.2002 DE 10255072
(43) Veröffentlichungstag der Anmeldung: 24.08.2005
(73) Patentinhaber: Sensovation AG, 78333 Stockach (DE)
(72) Erfinder: BICKERT, Stefan, 88662 Überlingen (DE); GÜNTHER, Ulrich, 88662 Überlingen (DE); HING, Paul, 88696 Owingen (DE); WIESER, Jürgen, 78315 Radolfzell (DE)
(74) Vertreter: Daub, Thomas
(86) Internationale Anmeldenummer: PCT/EP2003/012612
(87) Internationale Veröffentlichungsnummer: WO 2004/049258

(56) Entgegenhaltungen:
- EP-A- 0 596 749
- WO-A-01/35325
- US-A- 4 897 795
- US-A- 5 230 027
- NI Y.; GUAN J.: 'A 256 X 256 PIXEL SMART CMOS IMAGE SENSOR FOR LINE-BASED STEREO VISION APPLICATIONS' IEEE JOURNAL OF SOLID-STATE CIRCUITS Juli 2000, Seiten 1055 - 1061
- ELOUARDI A.; BOUAZIZ S.; REYNAUD R.: 'Evaluation of an artificial CMOS retina sensor for tracking systems' PROCEEDINGS OF THE INTELLIGENT VEHICLE SYMPOSIUM 2002 17 Juni 2002, Seiten 513 - 518

## Beschreibung

### Stand der Technik

Die Erfindung geht aus von einem Verfahren zum Erfassen einer Eigenschaft mindestens eines Gegenstands.

Aus der US 5,098,426 ist ein Verfahren zur Durchführung einer Laseroperation am menschlichen Auge bekannt, bei dem das Auge mit Hilfe von zwei Kameras beobachtet wird. Hierbei ist eine Kamera eine Videokamera zur Ausgabe von Videobildern für einen behandelnden Arzt und die zweite Kamera ein Hochgeschwindigkeits-Arraysensor, der zur schnellen Positionierung des Lasers vorgesehen ist. Der apparative Aufbau zum Erfassen der Position des Auges, der sowohl eine schnelle Verfolgung des Auges als auch eine visuelle Überwachung durch den behandelnden Arzt zulässt, ist hierbei recht hoch.

Ferner zeigt das Dokument "A 256 x 256 Pixel Smart CMOS Image Sensor for Line-Based Stereo Vision Appications", IEEE Journal of Solide-State Circuits, Vol. 35, Nummer 7, Juli 2000 einen CMOS-Sensor für Stereoanwendungen.

Ausgehend von diesem nächstliegenden Stand der Technik ist es daher die Aufgabe der Erfindung, ein Verfahren zum schnellen Erfassen einer Eigenschaft eines Gegenstands und zur Überwachung des Gegenstands anzugeben, das mit einer relativ einfachen Apparatur durchgeführt werden kann.

Diese Aufgabe wird durch ein Verfahren zum Erfassen einer Eigenschaft mindestens eines Gegenstands gelöst, bei dem
a. vom Gegenstand beeinflusste Lichtstrahlung einem Bildsensor zugeführt wird,
b. mindestens zwei unterschiedliche aus Pixeln bestehende Teilbilder nacheinander aus dem Bildsensor ausgelesen werden und den Pixeln zugeordnete Werte einer Auswerteeinheit zugeführt werden,
c. aus den Werten, die einem Teilbild zugeordnet sind, jeweils die Eigenschaft des Gegenstands ermittelt wird,
d. die Teilbilder zu einem Gesamtbild zusammengesetzt werden, das zur weiteren Verarbeitung ausgegeben wird.

Es wird vorgeschlagen, dass die Auslese-Sequenz eines Teilbilds anhand einer aus einem vorhergehenden Teilbild ermittelten Eigenschaft des Gegenstands gesteuert wird.

Mit diesem Verfahren kann anhand nur eines einzigen Bildsensors eine Eigenschaft des Gegenstands, beispielsweise die Position oder Geschwindigkeit des Gegenstands, sehr schnell, also sehr zeitnah, erfasst werden, wobei gleichzeitig eine beispielsweise visuelle Überwachung des Gegenstands ermöglicht wird. Durch die erfindungsgemäße Ausgestaltung kann das Teilbild so speziell auf den Gegenstand angepasst werden, WOdurch auch mit einem nur wenige Pixel umfassenden Teilbild eine zuverlässige Ermittlung der Eigenschaft erreicht werden kann. In der Auslese-Sequenz ist die Auswahl der Pixel eines Teilbilds festgelegt.

Der Bildsensor kann hierbei ein preiswerter, handelsüblicher und in der Videotechnik gebräuchlicher Bildsensor sein. Es ist jedoch auch möglich, einen Hochgeschwindigkeitsarraysensor zu verwenden. Es sollte lediglich die Auslese-Sequenz des Bildsensors frei oder im Wesentlichen frei steuerbar sein. Eine Vorrichtung zur Durchführung des Verfahrens ist beispielsweise aus der WO 02/25934 A2 bekannt.

Bei der Ermittlung einer Eigenschaft des Gegenstands ist es vorteilhaft, die Eigenschaft in einer möglichst schnellen Zeitfolge wiederholt ermitteln zu können. Eine schnelle Erfassung der Eigenschaft kann erreicht werden, indem die Eigenschaft aus einem relativ kleinen Teilbild ermittelt wird, das schnell ausgelesen und ausgewertet werden kann. Ein solches Teilbild enthält jedoch nicht die Information, die zu einer beispielsweise visuellen Überwachung des Gegenstands notwendig ist. Diese Information ist in einem Gesamtbild enthalten. Durch die Erfindung wird ermöglicht, mit Bildern aus nur einem Bildsensor eine schnelle Erfassung einer Eigenschaft des Gegenstands in Kombination mit einem hoch auflösenden Gesamtbild zu erhalten. Es ist natürlich auch möglich, mehrere Eigenschaften gleichzeitig oder hintereinander zu ermitteln.

Die dem Bildsensor zugeführte Lichtstrahlung ist üblicherweise sichtbares Licht. Es ist auch möglich, dem Bildsensor Infrarotstrahlung oder ultraviolette Strahlung zuzuführen. Die Art der den Pixeln zugeordneten Werte ist abhängig von der Art des Bildsensors. Die Werte können Ladungswerte oder Spannungswerte sein. Es ist auch möglich, dass Werte von Pixeln der Teilbilder bereits während einer Integration bzw. Belichtung ausgelesen oder überwacht werden, ohne dass die Werte in erheblichem Umfang davon beeinflusst werden. Hierdurch kann ein Gesamtbild mit einer hohen Intensität erreicht werden. Außerdem kann die Belichtung an ein gutes Verhältnis von Signal zu Rauschen angepasst werden. Die aus Pixeln bestehenden Teilbilder können die gleiche Anzahl oder unterschiedliche Anzahlen von Pixeln aufweisen. Außerdem können die Pixel der Teilbilder auf dem Bildsensor zusammengefasst werden ("onchip pixel binning"). Neben einer sofortigen Reduzierung der Datenmenge bietet diese Vorgehensweise den Vorteil eines im Verhältnis zum Signal niedrigen Rauschens.

Die Form, die Größe und die Lage der Teilbilder innerhalb des Gesamtbilds sind zweckmäßigerweise frei wählbar. Die Ausgabe des Gesamtbilds erfolgt zur weiteren Verarbeitung. Die Verarbeitung kann beispielsweise durch die Ausgabe des Gesamtbilds auf einen Bildschirm erfolgen. Es ist auch möglich, das Gesamtbild dahingehend zu verarbeiten, dass nur Teile des Gesamtbilds beispielsweise auf dem Bildschirm ausgegeben werden. Ebenso kann das Gesamtbild in einer anderen Weise verarbeitet werden, wobei es beispielsweise abgespeichert wird oder nur Vergleiche von Gesamtbildern ausgegeben oder aus dem Gesamtbild gewonnene andere Ergebnisse weiter- oder ausgegeben werden. Ein Teilbild umfasst eine Anzahl von Pixeln, die kleiner ist als die Gesamtzahl der Pixel des Bildsensors. Die Anordnung der Pixel ist beliebig.

Eine besonders schnelle mehrfach hintereinander folgende Ermittlung der Eigenschaften des Gegenstands wird erreicht, indem das Ermitteln der Eigenschaften aus Werten eines Teilbilds und das Auslesen eines folgenden Teilbilds zumindest teilweise gleichzeitig erfolgt. Es können die Werte nach dem Auslesen des ersten Teilbilds der Auswerteeinheit zugeführt werden, die daraus in einem folgenden Schritt die Eigenschaft des Gegenstands ermittelt. Während die Auswerteeinheit an der Ermittlung der Eigenschaft arbeitet, werden aus dem Bildsensor die Werte eines zweiten Teilbilds ausgelesen. Das Auslesen und das Auswerten sollte hierbei zumindest teilweise gleichzeitig erfolgen, so dass die beiden Prozesse zu zumindest einem Zeitpunkt gleichzeitig erfolgen.

Vorteilhafterweise überdecken sich die Teilbilder nicht. Hierdurch können die Teilbilder schnell zu einem vollständigen und lückenlosen Gesamtbild guter Auflösung zusammengesetzt werden. Außerdem sind die Teilbilder zweckmäßigerweise so angeordnet, dass bei einem späteren Zusammensetzen der Teilbilder zu einem Gesamtbild alle örtlichen Bereiche des Gesamtbilds durch Teilbilder abgedeckt sind. Hierdurch wird ein vollständiges, visuell leicht auswertbares Gesamtbild erreicht. Alternativ ist es auch möglich, dass das Gesamtbild aus nicht alle örtlichen Bereiche abdeckenden Teilbildern zusammengesetzt ist. Die nicht abgedeckten Bereiche können interpoliert oder extrapoliert werden. Hierdurch kann aus wenigen oder kleinen Teilbildern ein Gesamtbild zusammengesetzt werden.

Zur Erreichung einer möglichst genauen Erfassung einer Eigenschaft des Gegenstands ist es vorteilhaft, wenn die Teilbilder aus mindestens zwei nicht zusammenhängenden Pixelbereichen zusammengesetzt sind. Die Pixelbereiche umfassen jeweils mindestens drei Pixel und stoßen nirgendwo aneinander. Zur Erfassung der Eigenschaft kann es ausreichen, wenn der Gegenstand nicht vollständig durch ein Teilbild abgedeckt wird, sondern durch das Teilbild nur Ausschnitte des Gegenstands erfasst werden. Hierdurch kann die Anzahl der Pixel eines Teilbilds gering gehalten und das Auslesen und Auswerten der Pixelwerte sehr schnell durchgeführt werden. Die nicht zusammenhängenden Pixelbereiche sind zweckmäßigerweise so positioniert, dass durch sie Bereiche des Gegenstands erfasst werden, aus denen ein Rückschluss auf die Eigenschaft des Gegenstands möglich ist.

Eine besonders einfach zu steuernde Auslese-Sequenz der Teilbilder wird erreicht, indem die Teilbilder jeweils aus einer Anzahl von vollständig ausgelesenen Pixelzeilen des Bildsensors zusammengesetzt werden. Die Teilbilder überdecken hierbei die Länge oder die Breite des Pixelfelds des Bildsensors vollständig. Sie sind jedoch auf nur einen Teil der Pixelzeilen des Pixelfelds beschränkt.

Ein besonders schnelles Auslesen und Verarbeiten der Teilbilder kann erreicht werden, indem die Teilbilder jeweils aus einer Anzahl von nur teilweise ausgelesenen Pixelzeilen des Bildsensors zusammengesetzt werden. Zur Erfassung eines Gegenstands, der beispielsweise nur einen geringen Ausschnitt des Pixelfelds des Bildsensors überdeckt, ist es nicht notwendig, die gesamte Länge oder Breite des Pixelfelds durch die Teilbilder abzudecken. Die ausgelesenen Pixelzeilen überdecken dann vorteilhafterweise nur den für die Ermittlung der Eigenschaft wichtigen oder zweckmäßigen Bereich. Hierdurch kann die Pixelanzahl der Teilbilder gering gehalten werden und das Auslesen und Auswerten kann schnell erfolgen.

In einer vorteilhaften Ausführungsform der Erfindung sind die Pixelzeilen eines Teilbilds jeweils durch eine vorgegebene Anzahl nicht auszulesender Pixelzeilen voneinander beabstandet. Eine Eigenschaft des Gegenstands, wie beispielsweise seine Position, Größe, Form oder Bewegungsgeschwindigkeit, kann auf diese Weise mit nur einer geringen Anzahl von Pixeln erfasst werden. Das Teilbild kann den Gegenstand vollständig überdecken, ohne dass jedes den Gegenstand abbildende Pixel ausgelesen werden muss. Die vorgegebene Anzahl nicht auszulesender Pixelzeilen kann so bestimmt sein, dass sie für alle Zeilenzwischenräume gleich ist. Zwischen den auszulesenden Pixelzeilen sind somit immer dieselbe Anzahl von nicht auszulesenden Pixelzeilen angeordnet. Es wird eine gleichmäßig dichte Überdeckung des ausgesuchten Bereichs durch das Teilbild erreicht. Es ist jedoch auch möglich, die auszulesenden Pixelzeilen durch verschiedene Anzahlen von nicht auszulesenden Pixelzeilen beabstandet auszuwählen. Die Lage der auszulesenden Pixelzeilen kann hierbei auf eine möglichst effektive Ermittlung der gewünschten Eigenschaft des Gegenstands ausgerichtet werden.

In einer weiteren vorteilhaften Ausgestaltung der Erfindung wird die Auslese-Sequenz eines auf ein erstes Teilbild abfolgend ausgelesenen zweiten Teilbilds um eine Pixelzeile zum ersten Teilbild versetzt. Die Auslese-Sequenz ist hierbei besonders einfach. Außerdem wird, insbesondere bei einer regelmäßigen Anordnung der ausgelesenen Pixelzeilen, eine schnelle und einfache Erzeugung eines vollständigen Gesamtbilds durch die Teilbilder erreicht.

Bei einem Auslesen der Teilbilder in einer solchen Zeit, dass mindestes zehn Gesamtbilder pro Sekunde ausgegeben werden können, kann bei einer visuellen Ausgabe der Gesamtbilder eine ruckelarme Darstellung der Bewegung des Gegenstands erreicht werden. Bei einer vorteilhaften Zusammensetzung eines Gesamtbilds aus mindestens zehn Teilbildern werden somit mindestens 100 Teilbilder pro Sekunde ausgelesen. Zweckmäßigerweise werden mindestens 25 Gesamtbilder pro Sekunde ausgegeben, damit eine flimmerarme Darstellung der Gesamtbilder erreicht werden kann.

Vorteilhafterweise besteht ein Teilbild nur aus so vielen Pixeln, dass das Auslesen eines Teilbilds und das Ermitteln der Eigenschaft jeweils innerhalb von 10 Millisekunden erfolgen kann. Die Anzahl der Pixel, die ein Teilbild maximal umfassen kann, hängt somit von der Verarbeitungsgeschwindigkeit der das Verfahren durchführenden Vorrichtung ab. Es wird eine hinreichend schnelle wiederholte Ermittlung der Eigenschaft erreicht, um ein Gerät, beispielsweise ein Laseroperationsgerät zur Behandlung eines menschlichen Auges, schnell genug an die Bewegung eines Gegenstands anpassen zu können.

Besonders vorteilhafte Anwendungen des Verfahrens werden erreicht, wenn als Eigenschaft mindestens ein Parameter des Gegenstands aus der Gruppe Position, Abmessung, Form, Veränderung der Form, Bewegungsgeschwindigkeit, Farbe, Helligkeit, Lichtreflexionsverhalten des Gegenstands ermittelt wird. Je nach Anwendung des Verfahrens kann ein oder können mehrere Parameter aus den genannten acht Parametern ermittelt werden, wobei bei der Ermittlung mehrerer Parameter die ermittelten Ergebnisse ganz generell zu neuen Parametern kombiniert werden können. Die ermittelte Position und Abmessung des Gegenstands kann beispielsweise zur Steuerung eines für medizinische Zwecke eingesetzten Lasergeräts verwendet werden. Die Kenntnis der Form und der Veränderung der Form des Gegenstands kann zur Verhaltens- und Zustandsbestimmung sowie zum Sortieren, Erkennen oder Aussortieren von Kleinlebewesen, wie beispielsweise Zellen, Bakterien oder Pilzkulturen, eingesetzt werden. Die Position, Abmessung, Form, Veränderung der Form und Bewegungsgeschwindigkeit des Gegenstands kann zur Steuerung der Auslese-Sequenz eines Teilbilds oder von Teilbildern verwendet werden. Die Teilbilder können auf diese Weise effektiv auf den Gegenstand ausgerichtet und das Ermitteln der Eigenschaft zeiteffizient und hardware-effizient ausgerichtet werden. Das schnelle Erkennen von Farbe und gegebenenfalls Farbveränderung kann zum Verfolgen und/oder Beeinflussen von Gegenständen genutzt werden. Es können sich schnell bewegende markierte Lebewesen oder beispielsweise verfaulte Lebensmittel auf einem Förderband schnell erkannt und ggf. aussortiert werden. Die Kenntnis der Helligkeit und/oder des Lichtreflexionsverhaltens des Gegenstands kann unter anderem bei der Untersuchung von dünnen oder aufwachsenden Schichten verwendet werden. Das Verfahren kann hiermit in physikalischen, biologischen sowie chemischen Prozessen, bei der Herstellung oder Analyse von Bio-Chips oder zur Überwachung von sich schnell verändernden Strukturen eingesetzt werden. Unter dem Lichtreflexionsverhalten wird unter anderem die Änderung von vom Gegenstand reflektiertem Licht im Verhältnis zum eingestrahlten Licht verstanden, wie beispielsweise Wellenlängenverschiebung, Wellenlängenverbreiterung, Lichtstreuung, Reflexionswinkelveränderung oder Absorptionsgrad bei der Lichtreflexion.

Der Rechenprozess bei der Erkennung einer Eigenschaft des Gegenstands kann vereinfacht werden, und die Erkennung kann zuverlässig durchgeführt werden, indem die Eigenschaft mit Hilfe einer Eigenschaftsvorgabe ermittelt wird. Unter einer Eigenschaftsvorgabe wird eine jegliche Vorgabe einer Eigenschaft verstanden, die der Gegenstand erfüllen muss. Soll beispielsweise als Eigenschaft die Position des Gegenstands ermittelt werden, so kann eine Formvorgabe, beispielsweise ein Kreis, vorgegeben werden, die der Gegenstand erfüllen muss. Aus den Werten, die einem Teilbild zugeordnet sind, wird somit die Position des Gegenstands, der als ein Kreis angenommen wird, ermittelt. Durch diese Vorgabe kann aus ei-ner relativ geringen Anzahl von Werten die Eigenschaft mit großer Zuverlässigkeit ermittelt werden. Die Anzahl der Werte kann gegenüber einem Verfahren ohne Eigenschaftsvorgabe reduziert werden, wodurch das Auslesen und Verarbeiten eines Teilbilds beschleunigt werden kann.

Eine hohe Flexibilität und ein hohes Anpassungsvermögen an eine gegebene Anwendung kann erreicht werden, indem die Eigenschaftsvorgabe aus mindestens einer bereits ermittelten Eigenschaft abgeleitet wird. Bei der Verfolgung von einem oder mehreren sich verändernden Gegenständen kann eine Eigenschaft, wie z.B. eine Form oder ein Formbereich, durch die Auswertung eines oder einer Anzahl von Teilbildern ermittelt worden sein. Diese Eigenschaft kann als Eigenschaftsvorgabe bei der Auswertung von einem oder mehreren folgenden Teilbildern vorgegeben werden. Hierdurch kann die Eigenschaft aus relativ wenigen Pixeln mit hoher Präzision erkannt werden, ohne dass die Eigenschaft bei jedem Teilbild vollständig neu ermittelt werden müsste.

In vorteilhafter Fortbildung der Erfindung wird mit mindestens einem aus der Eigenschaft des Gegenstands gewonnenen Wert ein Gerät gesteuert. Es kann eine zuverlässige Verknüpfung zwischen Gegenstand und Gerät und eine präzise Führung des Geräts erreicht werden. Das Gerät kann ein Lasergerät zur ärztlichen Behandlung eines menschlichen Organs sein. Es ist auch möglich, dass das Gerät eine Ausrichtungsvorrichtung zur Positionierung des Bildsensors oder einer Lichteinstrahlvorrichtung relativ zum Gegenstand ist. Der Bildsensor kann somit in Bezug auf einen sich bewegenden Gegenstand nachjustiert werden. Ebenso vorteilhaft kann das Gerät eine Lichteinstrahlungsvorrichtung sein, die beispielsweise Licht auf den Gegenstand strahlt, wobei als Eigenschaft die Helligkeit des reflektierten Lichts erkannt werden kann. Es ist auch denkbar, dass das Gerät eine Vorrichtung zur Steuerung eines elektrischen Parameters ist. Der Parameter kann eine Spannung sein, die an ein Probengefäß angelegt wird und durch die sich Gegenstände in der Probe bewegen. Durch das schnelle Erkennen von Gegenständen und die gleichzeitige Überwachungsmöglichkeit anhand des Gesamtbilds ist das Verfahren besonders zur Steuerung eines Roboters geeignet. Der Roboter kann anhand der Ergebnisse des Verfahrens mit hoher Geschwindigkeit Handlungen am und um den Gegenstand durchführen, wobei durch die zusätzliche Überwachungsfunktion die Sicherheit des Roboters gewährleistet ist. Es ist auch denkbar, dass das Gerät ein Klebe- oder Schweißgerät ist oder eine Sortiervorrichtung zum Sortieren durch Ansteuerung eines Aktuators, wie beispielsweise eines pneumatischen Ventils oder eines Magneten.

In einer weiteren Ausgestaltung der Erfindung wird ein Geräteparameter in Verbindung mit mindestens einem aus der Eigenschaft des Gegenstands gewonnenen Wert geregelt. Der Geräteparameter kann beispielsweise die Geschwindigkeit eines sich bewegenden Gegenstands beeinflussen, wobei die Geschwindigkeit im Regelkreislauf anhand einer Vorgabe optimiert wird. Es ist auch möglich, die Lichteinstrahlung auf den Gegenstand so zu regeln, dass ein möglichst gutes Verfahrensergebnis realisiert wird.

Eine zuverlässige Überwachung des Gegenstands kann erreicht werden, indem die Veränderung der Eigenschaft des Gegenstands durch eine Abfolge von Gesamtbildern dargestellt wird. Die Darstellung kann visuell erfolgen, wobei eine Person den Gegenstand auf einem Bildschirm überwacht. Es kann eine in vivo oder in vitro Betrachtung von Gewebe bei einer gleichzeitigen Bearbeitung oder Beeinflussung des Gewebes erreicht werden. Möglich ist auch eine Beobachtung, Sortierung oder Beeinflussung von Organismen, Zellen oder Lebensformen sowie eine Analyse einer Körperflüssigkeit.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Vorrich- tung zur Durchführung des erfindungsgemäßen Verfahrens,
- Fig. 2: eine Darstellung von drei Teilbildern, die zu einem Gesamtbild summiert werden,
- Fig. 3: ein schematisches Diagramm des zeitlichen Ab- laufs des Verfahrens,
- Fig. 4: eine schematische Darstellung eines menschli- chen Auges mit ermittelten Stützstellen zur Errechnung der Position des Auges,
- Fig. 5: einen schematischen Ablauf einer Verfolgung eines Gegenstands,
- Fig. 6: eine Darstellung der Ausrichtung einer Abfolge von Gesamtbildern auf einen Gegenstand und
- Fig. 7: eine schematische Darstellung eines Überwa- chungsvorgangs des Wachsens kleiner Strukturen auf einem Substrat.

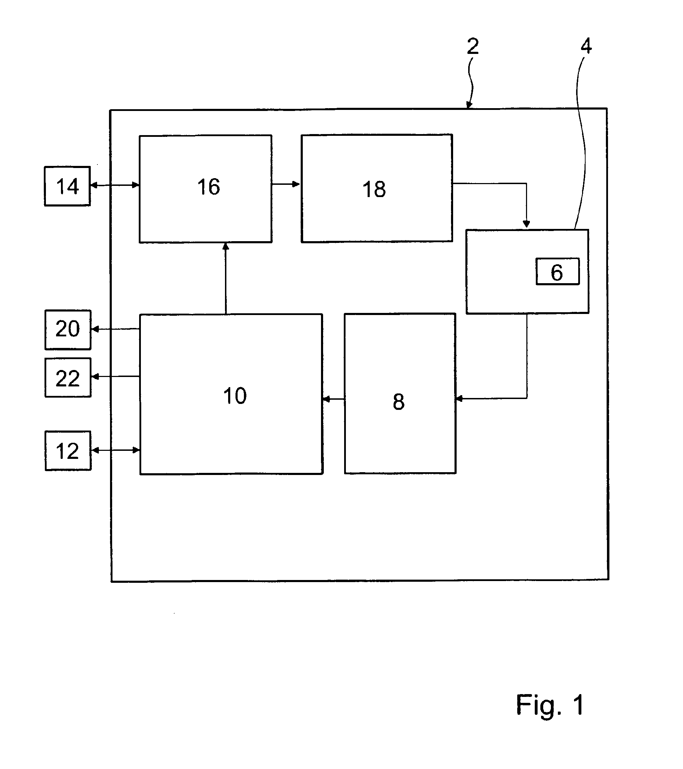

Figur 1 zeigt in einer schematischen Darstellung eine Vorrichtung 2 zur Durchführung des erfindungsgemäßen Verfahrens. Die Vorrichtung 2 umfasst eine Einrichtung 4 zur Erzeugung von Bildern. In die Einrichtung 4 ist ein Bildsensor 6 integriert, der als ein CCD-Sensor mit ladungsgekoppelten Bauelementen ausgeführt sein kann. Ebenso ist ein CMOS-Sensor denkbar. Der Bildsensor 6 ist ein handelsüblicher Sensor, wie er beispielsweise in Videokameras Verwendung findet. Er weist die Eigenschaft auf, dass seine Steuerung hinsichtlich des Betriebsmodus als auch hinsichtlich der Zeit in so einer Weise programmierbar ist, dass die Steuerung einzelner Pixel, ein Zugriff auf die Pixel und das Verschieben von Ladungen bzgl. einzelner Pixel und/oder Zeilen durch eine Signalverarbeitungseinheit, einen Host-Rechner und einen Benutzer definiert werden kann. Darüber hinaus ist die Auslese-Sequenz, in der die einzelnen Pixel des Bildsensors 6 ausgelesen werden können, im Wesentlichen ohne Einschränkung definierbar. Einschränkungen bilden lediglich die durch die Architektur des Bildsensors 6 vorgegebenen zulässigen Grenzen.

Die den einzelnen Pixeln des Bildsensors 6 zugeordneten elektrischen Ladungen oder analogen Spannungswerte werden einer Schaltung 8 zugeführt. Die Schaltung 8 ist an die Einrichtung 4 angepasst und arbeitet digital oder wandelt analoge Signale digital um. Die von der Schaltung 8 ausgegebenen Signale werden an eine Auswerteeinheit 10 weitergegeben. Die Auswerteeinheit 10 ist eine Einrichtung zur schnellen Datenverarbeitung, z.B. ein elektronisches DSP-System, und führt Datenverarbeitungsalgorithmen aus. Die Auswerteeinheit 10 zeichnet sich dadurch aus, dass sie die Daten sofort auswerten und Änderungen oder Ereignisse schnell erkennen kann. Hierdurch ist eine unmittelbare Rückkopplung und Steuerung des Betriebsmodus des Bildsensors 6 und/oder externen Einheiten 12 möglich. Auswerteergebnisse können sofort von der Auswerteeinheit 10 ausgegeben werden. Die Programmierung, Steuerung und der Betrieb der Vorrichtung 2, beispielsweise von einem Host-Rechner 14 oder einem Benutzer, erfolgt durch eine Kommunikationseinrichtung 16. Die Kommunikationseinrichtung 16 kann Steuer- und Statusinformationen, Programmcodes usw. empfangen, verarbeiten und wieder ausgeben.

Die Vorrichtung 2 umfasst außerdem eine Sensorsteuerung 18. Die Sensorsteuerung 18 steuert die Auslese-Sequenz zum Auslesen des Bildsensors 6. In der Auslese-Sequenz sind diejenigen Pixel angegeben, die in einem Auslesevorgang ausgelesen werden sollen, sowie der Zeitablauf des Auslesens. Die Auslese-Sequenz umfasst außerdem das Takten, Löschen, Zugreifen, Auslesen oder Aufsummieren der einzelnen Pixel und/oder Zeilen, wobei ein Auslesen in jeder beliebigen Folge möglich ist. Die Auslese-Sequenz kann für jedes aus dem Bildsensor 6 ausgelesenen Teilbild unterschiedlich sein.

Angeschlossen an die Vorrichtung 2 ist eine Videoausgabe 20, in der die von der Auswerteeinheit 10 erzeugten Gesamtbilder visuell auf einen Bildschirm ausgegeben werden. Es ist auch möglich, dass die Auswerteeinheit 10 Teilbilder an die Videoausgabe 20 weitergibt, die die Teilbilder zu Gesamtbildern zusammensetzt. Des Weiteren ist ein Gerät 22 an die Vorrichtung 2 angeschlossen. Es ist auch möglich mehrere Geräte anzuschließen. Das Gerät 22 kann ein Laser zur medizinischen Behandlung eines menschlichen Organs sein. Es ist auch möglich, das Gerät 22 zur Positionierung der Einrichtung 4 vorzusehen oder in dem Gerät 22 die aus der Auswerteeinheit 10 ermittelten Ergebnisse in sonstiger Weise weiterzuverarbeiten. Eine detaillierte Beschreibung einer Vorrichtung zur Durchführung des Verfahrens ist in der WO 02/25934 A2 beschrieben, wobei der Offenbarungsgehalt dieser Schrift ausdrücklich in diese Figurenbeschreibung mit aufgenommen ist.

Die Vorrichtung 2 ist mit den anhand der folgenden Figuren beschriebenen Verfahren in der Lage, eine Hochgeschwindigkeitsbildverarbeitung, wie z.B. eine Mustererkennung, mit einer zugehörigen Echtzeit-rückgekoppelten Steuerung und einer Erzeugung von visuellen Bildern zur Überwachung eines Vorgangs durchzuführen.

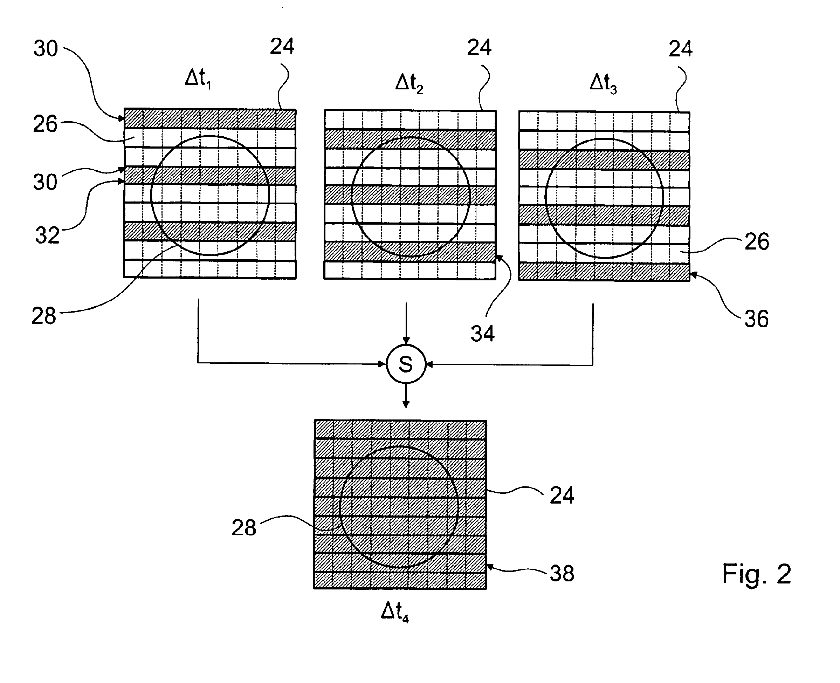

Grundzüge des Verfahrens sind in Figur 2 beschrieben. Ein Gegenstand 28 wird so beleuchtet, dass vom Gegenstand 28 reflektiertes Licht auf den Bildsensor 6 auftrifft. Der Bildsensor 6 weist ein Pixelfeld 24 auf, das der Anschaulichkeit halber aus nur 9x9 Pixeln 26 zusammengesetzt ist. Alle Pixel 26 des Pixelfelds 24 bilden zusammen den Gegenstand 28 ab. Der Bildsensor 6 wird von der Sensorsteuerung 18 so angesteuert, dass innerhalb eines ersten Zeitintervalls Δt₁ drei Pixelzeilen 30 aus dem Pixelfeld 24 Bildsensors 6 ausgelesen werden, und zwar die erste Zeile sowie die vierte und siebte Zeile. Diese Pixelzeilen 30 sind in Figur 2 schraffiert gezeichnet. Das erste Teilbild 32 besteht somit aus drei nicht zusammenhängenden Pixelbereichen. Die den einzelnen Pixeln 26 der ausgelesenen Pixelzeilen 30 zugeordneten Werte werden über die Schaltung 8 der Auswerteeinheit 10 zugeführt. Die drei ausgelesenen Pixelzeilen 30 bilden ein erstes Teilbild 32. Das Teilbild 32 setzt sich aus den Pixeln 26 zusammen, die in drei vollständig ausgelesenen Pixelzeilen 30 innerhalb des Pixelfelds 24 des Bildsensors 6 angeordnet sind. Zwischen den Pixelzeilen 30 des Teilbilds 32 sind jeweils zwei Pixelzeilen angeordnet, die innerhalb des ersten Zeitintervalls Δt₁ nicht ausgelesen werden.

Innerhalb eines späteren zweiten Zeitintervalls Δt₂ wird ein zweites Teilbild 34 aus dem Pixelfeld 24 des Bildsensors 6, gesteuert durch die Sensorsteuerung 8, ausgelesen. Das zweite Teilbild 34 ist wiederum aus drei Pixelzeilen 30 zusammengesetzt, die ebenfalls durch zwei innerhalb des Zeitintervalls Δt₂ nicht ausgelesene Pixelzeilen voneinander getrennt sind. Das Teilbild 34 ist aus den Pixeln 26 der zweiten, fünften und achten Pixelzeile 30 des Pixelfelds 24 des Bildsensors 6 zusammengesetzt. Das Teilbild 34 unterscheidet sich somit vom Teilbild 32 dadurch, dass die Auslese-Sequenz des zweiten Teilbilds 34 um eine Pixelzeile bzgl. der Auslese-Sequenz des ersten Teilbilds 32 versetzt ist. Die den Pixeln 26 der ausgelesenen Pixelzeilen 30 des zweiten Teilbilds 34 zugeordneten Werte werden ebenfalls der Auswerteeinheit 10 zugeführt. Die drei Teilbilder 32, 34, 36 sind so angeordnet, dass sie sich nicht überdecken.

In einem wiederum späteren Zeitintervall Δt₃ wird ein drittes Teilbild 36 aus dem Pixelfeld 24 des Bildsensors 6 ausgelesen. Das dritte Teilbild 36 ist gegenüber dem zweiten Teilbild 34 wiederum um eine Pixelzeile nach unten verschoben angeordnet und ist ansonsten gleich wie die beiden vorhergehend ausgelesenen Teilbilder 32 und 34. Auch die aus dem dritten Teilbild 36 resultierenden Werte werden der Auswerteeinheit 10 zur weiteren Auswertung zugeführt.

In der Auswerteeinheit 10 wird eine Bildsummierung S durchgeführt. Aus dieser Bildsummierung S ergibt sich ein Gesamtbild 38, das aus den Teilbildern 32, 34, 36 zusammengesetzt ist. Das Gesamtbild 38 deckt alle Pixel 26 des Pixelfelds 24 des Bildsensors 6 ab. Durch das Gesamtbild 38 wird der Gegenstand 28 vollständig abgebildet. Das Gesamtbild 38 wird innerhalb eines vierten Zeitintervalls Δt₄ auf einem Bildschirm der Videoausgabe 20 visuell ausgegeben. Das vierte Zeitintervall Δt₄ ist etwa genauso lang wie die Summe der drei Zeitintervalle Δt₁ bis Δt₃. Während das Gesamtbild 38 auf dem Bildschirm angezeigt wird, werden weitere Teilbilder aus dem Bildsensor 6 ausgelesen, wobei ein viertes Teilbild in seiner Auslese-Sequenz identisch ist wie das erste Teilbild - bis auf den Auslesezeitpunkt - und auch das fünfte Teilbild dem zweiten Teilbild 34 entspricht.

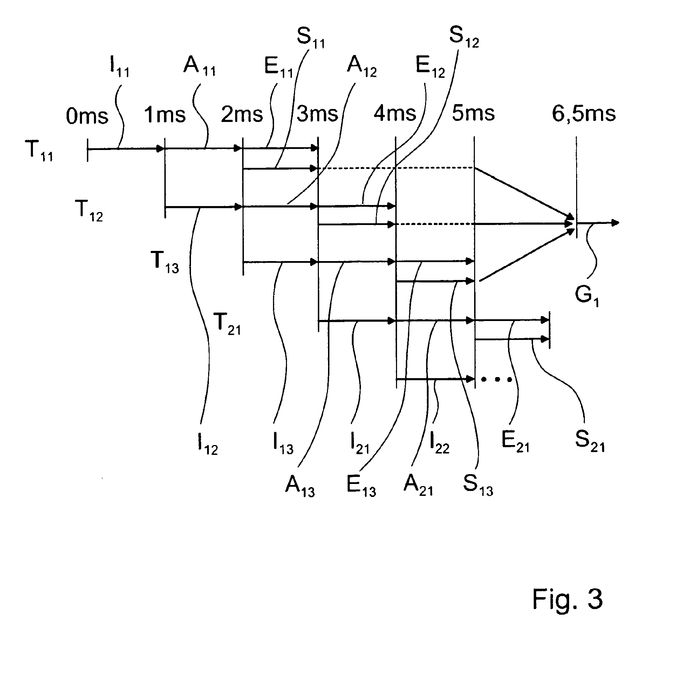

In Figur 3 ist eine Möglichkeit für einen zeitlichen Ablauf des Verfahrens gezeigt. Zu einem ersten Zeitpunkt, der in Figur 3 mit 0 ms markiert ist, beginnt die Integration I₁₁ eines ersten Teilbilds T₁₁. Hierbei werden in den Pixeln 26 des Bildsensors 6, die dem ersten Teilbild T₁₁ zugeordnet sind, durch Lichteinwirkung erzeugte Ladungen aufsummiert. Dieser Vorgang dauert beispielsweise 1 Millisekunde (ms) und endet zum Zeitpunkt, der in Figur 3 mit 1 ms gekennzeichnet ist. Zu diesem Zeitpunkt wird von der Sensorsteuerung 18 das Auslesen A₁₁ der Pixel 26 gesteuert, die dem ersten Teilbild T₁₁ zugeordnet sind. In dem in Figur 3 gezeigten Ablaufbeispiel dauert auch das Auslesen A₁₁ 1 ms und endet zu einem Zeitpunkt, der 2 ms hinter dem Anfang des Verfahrens liegt und mit 2 ms gekennzeichnet ist. Die aus dem Bildsensor 6 ausgelesenen Werte werden anschließend der Auswerteeinheit 10 zugeführt, die die Werte wiederum innerhalb eines Zeitintervalls von 1 ms auswertet und daraus eine Eigenschaft eines betrachteten Gegenstands ermittelt E₁₁. Innerhalb des gleichen Zeitintervalls von 2 ms bis 3 ms werden die ausgelesenen Werte durch die Auswerteeinheit 10 gespeichert S₁₁. Ebenfalls gespeichert oder an eine Kommunikationseinrichtung 16 oder an ein Gerät 22 oder an eine sonstige Einheit 12 weitergegeben wird auch die durch die Ermittlung E₁₁ errechnete Eigenschaft des Gegenstands 28, beispielsweise seine Position, Größe oder sein Lichtreflexionsverhalten.

Während des gleichen Zeitraums, in dem die dem ersten Teilbild T₁₁ zugeordneten Pixel aus dem Bildsensor 6 ausgelesen wurden, werden die einem zweiten Teilbild T₁₂ zugeordneten Pixel aufintegriert I₁₂. Das Aufintegrieren I₁₂ und das gleichzeitig stattfindende Auslesen A₁₁ muss hierbei nicht vollkommen synchron stattfinden, wie dies in Figur 3 der Einfachheit halber dargestellt ist, sondern kann sich auch nur teilweise zeitlich überdecken. So kann der Auslesevorgang A₁₁ beispielsweise in einem kürzeren Zeitintervall erfolgen als die Integration I₁₂. Der dem zweiten Teilbild T₁₂ zugeordnete Vorgang des Integrierens I₁₂, Auslesens A₁₂, Ermittelns E₁₂ einer oder mehrerer Eigenschaften des Gegenstands sowie das Speichern S₁₂ der ausgelesenen Werte läuft im Wesentlichen gleich ab, wie es oben bezüglich des ersten Teilbilds T₁₁ beschrieben ist, wobei die dem zweiten Teilbild T₁₂ zugeordneten Abläufe jeweils um 1 ms später als beim ersten Teilbild T₁₁ stattfinden.

Ebenfalls um 1 ms gegenüber dem zweiten Teilbild T₁₂ zeitlich nach hinten versetzt werden die Pixel, die einem dritten Teilbild T₁₃ zugeordnet sind, integriert I₁₃, ausgelesen A₁₃ und die Werte gespeichert S₁₃. Wie bei den vorhergehenden Teilbildern T₁₁ und T₁₂ erfolgt auch das Ermitteln E₁₃ der Eigenschaft oder der Eigenschaften des Gegenstands zumindest teilweise gleichzeitig wie das Speichern S₁₃ der ausgelesenen Pixelwerte. Wie aus Figur 3 leicht zu ersehen ist, erfolgen zu einem beliebigen Zeitintervall die Vorgänge der Integration Iᵢᵢ, des Auslesens Aᵢᵢ und des Berechnens bzw. des Ermittelns Eᵢᵢ der Eigenschaft oder der Eigenschaften des Gegenstands sowie das Speichern Sᵢᵢ der ausgelesenen Werte gleichzeitig. Der Anschaulichkeit halber sind die Zeitabläufe in Figur 3 vereinfacht dargestellt, wobei die Gleichzeitigkeit nicht vollständig sein muss.

Bedingt durch die geringe Pixelanzahl der einzelnen Teilbilder Tᵢᵢ können die Zeitintervalle, die in Figur 3 beispielhaft mit 1 ms angegeben sind, sehr kurz gehalten werden. Das Verfahren ist extrem schnell durchführbar, da die verschiedenen Verfahrensschritte synchron ausgeführt werden. Eine oder mehrere Eigenschaften des betrachteten Gegenstands können somit in einer sehr schnellen Zeitabfolge hintereinander ermittelt werden.

Nachdem der Vorgang des Ermittelns E₁₃ bzgl. der aus dem dritten Teilbild T₁₃ ermittelten Eigenschaften abgeschlossen ist, dieser Zeitpunkt ist in Figur 3 mit 5 ms angegeben, werden die aus den Teilbildern T₁ᵢ ermittelten Werte von der Auswerteeinheit 10 an die Videoausgabe 20 weitergegeben. In der Videoausgabe 20 werden die den Teilbildern T₁ᵢ zugeordneten Werte zu einem Gesamtbild zusammengesetzt und anschließend auf einem Monitor angezeigt G₁. Der Beginn des Anzeigens G₁ des ersten Gesamtbilds ist in Figur 3 beispielhaft bei 6,5 ms angegeben.

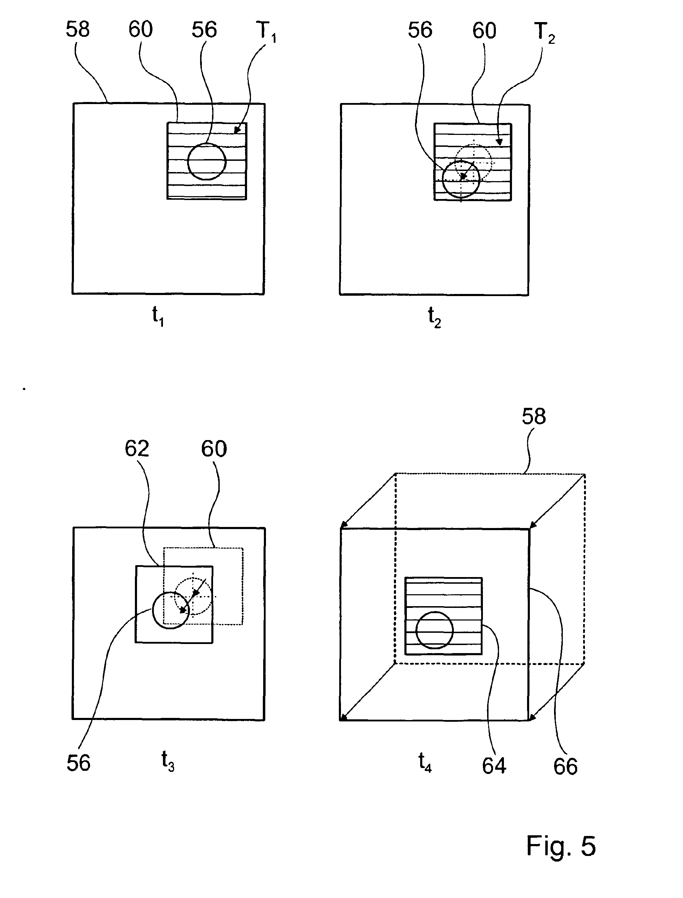

Nachdem die Integration I₁₃ des letzten Teilbilds T₁₃, das dem ersten Gesamtbild zugeordnet ist, beendet wurde, werden die Pixel, die einem nächsten ersten Teilbild T₂₁ zugeordnet sind, integriert I₂₁. Das nächste erste Teilbild T₂₁ kann in seiner Pixelzusammensetzung identisch sein wie das erste oben genannte erste Teilbild T₁₁. Es ist auch denkbar, dass die Pixelzusammensetzungen der Teilbilder T₂₁ und T₁₁ voneinander abweichen, wie dies beispielhaft in Figur 5 dargestellt ist. Ebenso wie mit dem ersten Teilbild T₁₁ wird auch mit dem nächsten ersten Teilbild T₂₁ verfahren, wobei die diesem Teilbild T₂₁ zugeordneten Pixel integriert I₂₁, ausgelesen A₂₁ und gespeichert S₂₁ werden. Zumindest teilweise synchron zum Speichern S₂₁ werden Eigenschaften des Gegenstands ermittelt E₂₁. Das Teilbild T₂₁ wird später in einem zweiten Gesamtbild durch die Videoausgabe 20 auf einem Bildschirm angezeigt.

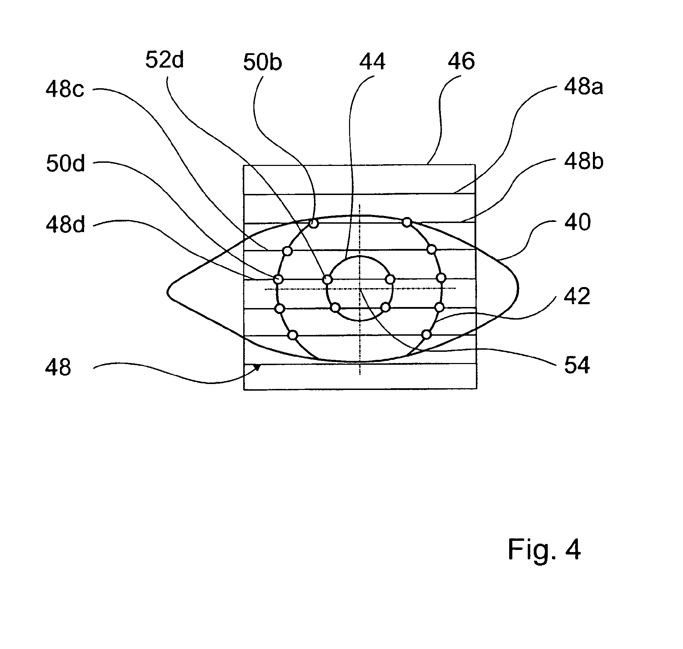

In Figur 4 ist ein Auge 40 in schematischer Art und Weise dargestellt. Das Auge 40 weist eine Iris 42 auf, von der in Figur 4 nur der äußere Umfang dargestellt ist. Innerhalb der Iris 42 ist die Pupille 44 ebenfalls nur anhand einer einzelnen Linie dargestellt. Von dem Auge 40 ausgehendes Licht fällt so in den Bildsensor 6, dass die in Figur 4 nicht einzeln dargestellten Pixel des Bildsensors 6 die Iris 42 vollständig und auch das Auge 40 bis auf seine äußersten Bereiche vollständig abbilden. Das gesamte Pixelfeld 46 setzt sich aus einer Anzahl von nxn Pixeln 26 zusammen, die in Figur 4 nicht einzeln gezeigt sind.

In Figur 4 ebenfalls dargestellt ist ein Teilbild 48, das aus sieben Pixelzeilen 48a, 48b, 48c usw. zusammengesetzt ist. Die den Pixelzeilen 48a, 48b usw. zugeordneten Werte werden in der Auswerteeinheit 10 ausgewertet, wobei der Grauwertverlauf von einem Pixel zum nächsten in einer Funktion wiedergegeben wird. Diese Funktion wird anhand einer Eigenschaftsvorgabe beispielsweise auf einen Wendepunkt hin untersucht. An einem solchen Wendepunkt ist der Unterschied der Grauwerte zweier benachbarter Pixel besonders groß. Auf diese Weise können von der Auswerteeinheit 10 Stellen im Auge 40 ermittelt werden, die im Folgenden als Stützstellen 50b, 50d, 50e usw. bezeichnet werden. Im in Figur 4 gezeigten Beispiel konnte aus der Pixelzeile 48a keine Stützstelle ermittelt werden, aus der Pixelzeile 48b resultieren zwei Stützstellen 50b und aus der Pixelzeile 48d resultieren vier Stützstellen 50d und 52d. Aus diesen Stützstellen 50b, 50d und 52d wird anhand der weiteren Eigenschaftsvorgabe, dass sowohl die Iris 42 als auch die Pupille 44 als kreisförmig zu betrachten sind, der Umriss sowohl der Iris 42 als auch der Pupille 44 bestimmt. Aus diesen Umrissen wird dann der Mittelpunkt 54 der Iris 42 bzw. der Pupille 44 berechnet. Auf diese, der Anschaulichkeit halber stark vereinfachte Weise wird als Eigenschaft die Position der Iris 42 anhand des Mittelpunkts 54 bestimmt. Die ermittelte Position kann von der Auswerteeinheit 10 nun an eine Gerät 22 weitergegeben werden, das beispielsweise einen medizinischen Laser zur Durchführung einer Augenoperation steuert. Da zur Berechnung der Position der Iris 42 nur relativ wenige Stützstellen 50b, 50d, 52d und somit nur wenige Pixelzeilen nötig sind, vollzieht sich die Berechnung des Mittelpunkts 54 bzw. der Position der Iris 42 sehr schnell.

Die dem Teilbild 48 zugeordneten Pixelwerte werden in der Auswerteeinheit 10 gespeichert und zu einem späteren Zeitpunkt zu einem Gesamtbild zusammengesetzt. Dieses Gesamtbild wird von der Auswerteeinheit 10 an die Videoausgabe 20 übermittelt und dort auf einem Überwachungsbildschirm für einen behandelnden Arzt angezeigt. Der behandelnde Arzt sieht somit die Iris 42 vollständig und hoch aufgelöst auf seinem Überwachungsbildschirm und kann damit die Operation durchführen und überwachen. Die Integration, das Auslesen und das Berechnen einer Eigenschaft bzgl. eines Teilbilds 48 dauert jeweils unter 1 ms. Es werden somit mehr als 1000 Teilbilder pro Sekunde und somit mehr als 1000 Eigenschaften bzw. Positionen der Iris 42 berechnet. Anhand dieser Positionen kann ein medizinischer Laser in der Weise gesteuert werden, dass er bei einer Bewegung der Iris 42 entweder nachgeführt oder erst abgeschaltet und dann nachgeführt wird. Die einzelnen Vorgänge erfolgen so schnell, dass sie dem Arzt nicht im Detail angezeigt werden. Der Arzt sieht nur das hoch aufgelöste vollständige Bild der Iris 42, in dem auch die momentane Position des Lasers angezeigt ist. Die Wiederholungsrate der Gesamtbilder beträgt 40 Hz. Ein Gesamtbild umfasst jeweils mehr als 25 Teilbilder.

Figur 5 stellt in schematischer Weise dar, wie ein Gegenstand 56 in seiner Bewegung verfolgt wird. Innerhalb eines Pixelfelds 58 eines Bildsensors wird ein Gegenstand 56 abgebildet. Der Gegenstand 56 füllt nur einen kleinen Teil des Gesamtpixelfelds 58 aus. Die Größe des Gegenstands 56 wurde in einer Abfolge von Teilbildern ermittelt, wobei dem Gegenstand 56 ein Gesamtbildfeld 60 zugeordnet wurde. Das Gesamtbildfeld 60 deckt nur einen kleinen Teil des Pixelfelds 58 des Bildsensors ab. Ab einem Zeitpunkt t₁ wird ein erstes Teilbild T₁ nur innerhalb des Gesamtbildfelds 60 aufgenommen. Das Teilbild T₁ umfasst sechs Pixelzeilen. Wie zu Figur 4 beschrieben, wird die Position des Gegenstands 56 aus den dem Teilbild T₁ zugeordneten Werten ermittelt.

Ab einem zweiten Zeitpunkt t₂ wird wiederum ein Teilbild T₂ aufgenommen. Zwischen den Teilbildern T₁ und T₂ können weitere Teilbilder aufgenommen worden sein. Aus den Werten, die dem Teilbild T₂ zugeordnet sind, wird erneut die Position des Gegenstands 56 berechnet. Der Gegenstand 56 befindet sich zum Zeitpunkt t₂ in einer anderen Position als zum Zeitpunkt t₁ und ist, wie in Figur 5 dargestellt, ein Stück weit nach unten links gewandert. Aus der Wanderung des Gegenstands 56 wird durch die Auswerteeinheit 10 als weitere Eigenschaft des Gegenstands 56 die Bewegungsgeschwindigkeit des Gegenstands 56 ermittelt. Aus dieser Bewegungsgeschwindigkeit wird errechnet, wann der Gegenstand 56 an die Grenzen des Gesamtbildfelds 60 stößt.

Zu einem Zeitpunkt t₃, der vor diesem errechneten Zeitpunkt liegt, wird durch die Auswerteeinheit 10 die Sensorsteuerung 18 in der Weise angesteuert, dass ab dem Zeitpunkt t₃ Teilbilder ausgelesen werden, die in einem neuen Gesamtbildfeld 62 zu liegen kommen. Die Verschiebung des Gesamtbildfelds 62 zum Gesamtbildfeld 60 ist an die Bewegungsgeschwindigkeit des Gegenstands 56 in der Weise angepasst, dass die durch den Bildsensor aufgenommenen Teilbilder den Gegenstand 56 immer vollständig abdecken. Aus einem zum Zeitpunkt t₃ aufgenommenen und in Figur 5 nicht gezeigten Teilbild wird wiederum die Position des Gegenstands 56 ermittelt, wobei die Position des Gegenstands 56 nicht der aus der Bewegungsgeschwindigkeit berechneten Position entspricht. Die Größe des Gesamtbildfelds 62 ist jedoch so gewählt, dass der Gegenstand 56 bei einer Abweichung der Position trotzdem noch von dem Gesamtbildfeld 62 vollständig abgedeckt wird.

Zu einem späteren Zeitpunkt t₄ ist das Gesamtbildfeld 64 bereits mit dem Gegenstand 56 weitergewandert und kommt im Wesentlichen am Rand des Pixelfelds 58 des Bildsensors zu liegen. Durch seine Bewegung droht der Gegenstand 56 aus dem Pixelfeld 58 zu laufen. Dies wird von der Auswerteeinheit 10 erkannt, die ein Gerät 22 in der Weise steuert, dass die Position des Bildsensors in vorgegebener Weise der Bewegung des Gegenstands 56 nachgesteuert wird. Zu den dem Zeitpunkt t₄ nachfolgenden Zeitpunkten weist das Pixelfeld 66 des Bildsensors daher eine gegenüber dem Pixelfeld 58 verschobene Lage auf, so dass das Gesamtbildfeld 64 wieder der Bewegung des Gegenstands 56 nachgeführt werden kann. Die Teilbilder zu den in Figur 5 gezeigten Zeitpunkten überdecken jeweils nur den Bereich des jeweiligen Gesamtbildfelds 60, 62, 64. Die Teilbilder sind somit jeweils aus einer Anzahl von nur teilweise ausgelesenen Pixelzeilen des Bildsensors zusammengesetzt. Das ausgegebene oder zur Weiterverarbeitung weitergeleitete Gesamtbild deckt somit ebenfalls die Fläche des jeweiligen Gesamtbildfelds 60, 62, 64 ab. Hierdurch wird einer Überwachungsperson oder einer Überwachungseinheit nur der jeweils bzgl. des Gegenstands 56 relevante Bildausschnitt in einem Gesamtbild angezeigt.

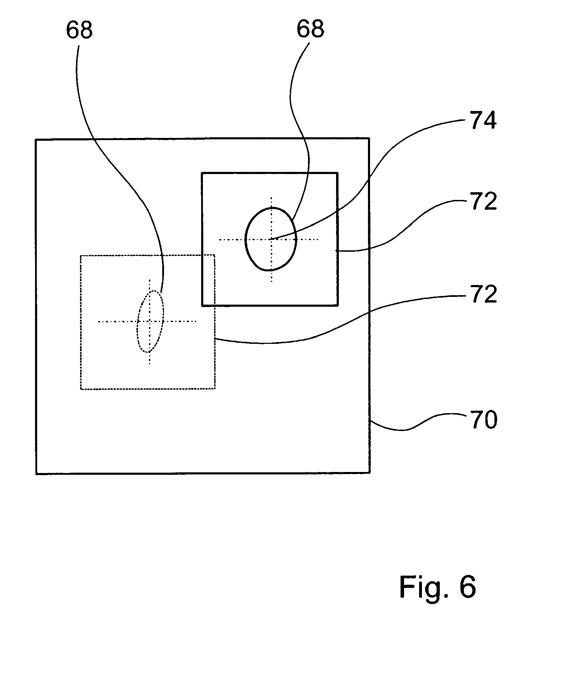

In Figur 6 ist die Verfolgung eines Gegenstands 68 gezeigt, dessen Form sich im Laufe der Zeit verändert. Wie in Figur 5 wird aus dem gesamten Pixelfeld 70 eines Bildsensors nur ein Ausschnitt in einem Gesamtbildfeld 72 ausgewertet und in einem Gesamtbild ausgegeben. Der Gegenstand 68 wird, wie oben beschrieben, anhand einer Abfolge von Teilbildern verfolgt, wobei anhand einer Berechungsvorgabe ein Mittelpunkt 74 des Gegenstands jeweils ermittelt wird. Dieser als Position des Gegenstands 68 zu verstehende Mittelpunkt 74 bildet auch den Mittelpunkt des Gesamtbildfelds 72, das somit kontinuierlich der langsamen Bewegung des Gegenstands 68 nachgeführt wird. Zu einem späteren Zeitpunkt befindet sich das Gesamtbildfeld 72 in der in Figur 6 gestrichelt gezeichneten Position. Gleichzeitig befindet sich der Gegenstand 68 ebenfalls in der gestrichelten Position.

In dem Teilbild, das der durchgezogenen Position des Gegenstands 68 zugeordnet ist, wird neben dem Mittelpunkt 74 des Gegenstands 68 auch die Form des Gegenstands 68 berechnet. Diese Form wird als Eigenschaftsvorgabe bei der Berechung der Form des Gegenstands 68 in einem folgenden Teilbild vorgegeben, wobei eine Abweichung der Form zugelassen wird. Durch diese Eigenschaftsvorgabe kann die Berechung der Form und der Position des Gegenstands 68 im Teilbild vereinfacht durchgeführt werden, da nur bestimmte Formen und Positionen möglich sind. Hierdurch kann die Anzahl der pro Teilbild der auszulesenden Pixel gering gehalten werden. Jedes Teilbild kann somit sehr schnell ausgelesen und die Eigenschaft kann sehr schnell berechnet werden.

Dadurch, dass bei der Eigenschaftsvorgabe auch eine Veränderung der Form des Gegenstands 68 zugelassen ist, wird die Eigenschaftsvorgabe, die von Teilbild zu Teilbild weitergereicht wird, an die aktuelle Form des Gegenstands 68 angepasst. Es ist auch möglich, die Eigenschaftsvorgabe nur jeweils nach einer Anzahl von Teilbildern anzupassen. Der Gegenstand 68 kann somit auf sehr effiziente und schnelle Weise in seiner Position und Form verfolgt werden.

Die Auswahl der Pixel eines Teilbilds ist an die Form des Gegenstands 68 angepasst. Es ist somit auch möglich, dass ein Teilbild nur einen Teil des Gesamtbildfelds abdeckt. Dieses Teilbild wird möglicherweise bei einer späteren Zusammensetzung eines Gesamtbilds nicht berücksichtigt, weil auch ohne dieses Teilbild genügend Teilbilder zur Verfügung stehen, um einer Überwachungsperson ein flimmerfreies Gesamtbild zur Verfügung zu stellen. Dieses Teilbild dient somit nur der Eigenschaftsberechnung.

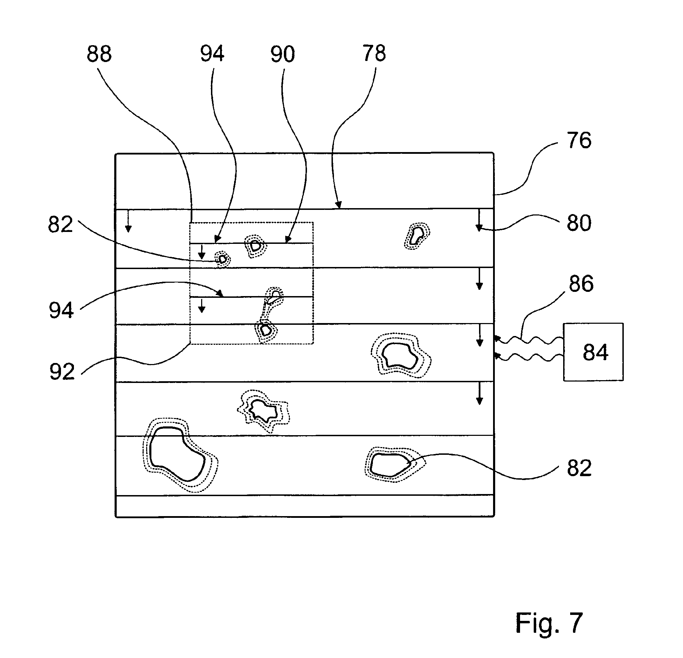

Eine weitere Anwendungsmöglichkeit des Verfahrens ist in Figur 7 dargestellt. Ein Pixelfeld 76 eines Bildsensors wird mit einer Abfolge von Teilbildern 78 ausgelesen. Die Teilbilder 78 bestehen jeweils aus sechs Pixelzeilen, wobei ein nächstfolgendes Teilbild 78 gegenüber dem vorausgehenden Teilbild 78 um jeweils eine Pixelzeile nach unten verschoben ist. Dies ist durch die Pfeile 80 angedeutet. Das Pixelfeld 76 ist auf eine Trägerplatte ausgerichtet, auf der eine Anzahl von biologischen Kulturen 82 aufgebracht ist. Diese Kulturen 82 werden von einem Gerät 84 mit Licht 86 bestrahlt und wachsen im Laufe der Zeit, was durch die gestrichelten Linien angedeutet ist. Die Kulturen 82 sollen hierbei möglichst so wachsen, dass sie eine weitgehend runde Form annehmen.

Die Wachstumsgeschwindigkeit der Kulturen 82, und damit zusammenhängend die Form der Kulturen, kann durch die Intensität des eingestrahlten Lichts 86 beeinflusst werden. Anhand der Werte aus den einzelnen Teilbildern 78 wird jeweils die momentane Form der einzelnen Kulturen 82 ermittelt und in einer Auswerteeinheit überwacht. Wird in der Auswerteeinheit festgestellt, dass sich die Kulturen 82 über ein festgelegtes Maß hinaus ungünstig entwickeln, so wird das Gerät 84 in der Weise angesteuert, dass die Intensität und gegebenenfalls die Frequenz des eingestrahlten Lichts verändert wird. Es wird hierdurch ein Regelkreis beschritten. Das Wachstum der Kulturen 82 wird weiterhin beobachtet und die Lichtintensität oder -frequenz entsprechend dem Wachstum der Kulturen 82 geregelt.

Es ist möglich, dass ein Bediener ein zuerst auf das Pixelfeld 76 ausgerichtetes Gesamtbildfeld auch auf einen speziellen kritischen Bereich 92 richten kann. In Figur 7 ist ein solcher Bereich dargestellt, an dem mehrere Kulturen 82 im Laufe der Zeit zusammenwachsen. Der Bediener kann das Gesamtbildfeld vom Pixelfeld 76 auf ein neues Gesamtbildfeld 88 reduzieren und diese Stelle gesondert und besonders fein überwachen. Es ist hierbei möglich, die Teilbilder weiterhin das gesamte Pixelfeld 76 durchlaufen zu lassen oder neue Teilbilder 90 nur in der Weise aus dem Gesamtpixelfeld 76 des Bildsensors auszuwählen, dass die Teilbilder 90 nur das Gesamtbildfeld 88 durchlaufen.

In einer weiteren Ausführungsvariante ist es auch möglich, dass ein Bediener zwar immer nur ein dem Pixelfeld 76 entsprechendes Gesamtbild gezeigt bekommt, eine Auswerteeinheit jedoch selbständig eine Fläche auswählt, in der zusätzliche Teilbilder 94 erzeugt werden. In Figur 7 ist zwischen jeder Pixelzeile des Teilbilds 78 eine zusätzliche Pixelzeile zwischengeordnet, die zum Teilbild 94 gehört. Es wird somit zusätzlich zum Teilbild 78 auch das Teilbild 94 aufgenommen, wobei die Aufnahme der Teilbilder 78, 94 gleichzeitig oder nacheinander erfolgen kann. Hierdurch wird eine besonders exakte und besonders schnelle Überwachung der Kulturen 82 erreicht, die sich innerhalb der Fläche 92 befinden. Eine Steuerung des Geräts 84 und eine entsprechende Bestrahlung der Kulturen 82 mit Licht 86 kann auf diese Weise speziell auf die kritischen Kulturen 82 innerhalb des Bereichs 92 ausgerichtet werden. Es wird hierdurch eine sehr schnelle und besonders effiziente Steuerung des Geräts 84 auf einen oder mehrere kritische Bereiche 92 erreicht.

### Bezugszeichen

- 2: Vorrichtung
- 4: Einrichtung
- 6: Bildsensor
- 8: Schaltung
- 10: Auswerteeinheit
- 12: Einheit
- 14: Host-Rechner
- 16: Kommunikationseinrichtung
- 18: Sensorsteuerung
- 20: Videoausgabe
- 22: Gerät
- 24: Pixelfeld
- 26: Pixel
- 28: Gegenstand
- 30: Pixelzeile
- 32: Teilbild
- 34: Teilbild
- 36: Teilbild
- 38: Gesamtbild
- 40: Auge
- 42: Iris
- 44: Pupille
- 46: Pixelfeld
- 48a: Pixelzeile
- 48b: Pixelzeile
- 48c: Pixelzeile
- 48d: Pixelzeile
- 50b: Stützstelle
- 50d: Stützstelle
- 52d: Stützstelle
- 54: Mittelpunkt
- 56: Gegenstand
- 58: Pixelfeld
- 60: Gesamtbildfeld
- 62: Gesamtbildfeld
- 64: Gesamtbildfeld
- 66: Pixelfeld
- 68: Gegenstand
- 70: Pixelfeld
- 72: Gesamtbildfeld
- 74: Mittelpunkt
- 76: Pixelfeld
- 78: Teilbild
- 80: Pfeil
- 82: Kultur
- 84: Gerät
- 86: Licht
- 88: Gesamtbildfeld
- 48: Teilbild
- 90: Teilbild
- 92: Bereich
- 94: Teilbild
- Δt₁: Zeitintervall
- Δt₂: Zeitintervall
- Δt₃: Zeitintervall
- Δt₄: Zeitintervall
- S: Bildsummierung
- T: Teilbild
- Tᵢᵢ: Teilbild
- Iᵢᵢ: Integration
- Aᵢᵢ: Auslesen
- Eᵢᵢ: Ermitteln
- Sᵢᵢ: Speichern
- G₁: Anzeigen
- t₁: Zeitpunkt
- t₂: Zeitpunkt
- t₃: Zeitpunkt
- t₄: Zeitpunkt

## Patentansprüche

1. Verfahren zum Erfassen einer Eigenschaft mindestens eines Gegenstands (28, 56, 68), bei dem
a. vom Gegenstand (28, 56, 68) beeinflusste Lichtstrahlung einem Bildsensor (6) zugeführt wird,
b. mindestens zwei unterschiedliche aus Pixeln (26) bestehende Teilbilder (32, 34, 36, 48, 78, 90, 94) nacheinander aus dem Bildsensor (6) ausgelesen (A₁₁, A₁₂, A₁₃, A₂₁) werden und den Pixeln (26) zugeordnete Werte einer Auswerteeinheit (10) zugeführt werden,
c. aus den Werten, die einem Teilbild (32, 34, 36, 48, 78, 90, 94, T₁, T₂) zugeordnet sind, jeweils die Eigenschaft des Gegenstands (28, 56, 68) ermittelt (E₁₁, E₁₂, E₁₃, E₂₁) wird,
d. die Teilbilder (32, 34, 36, 48, 78, 90, 94, T₁, T₂) zu einem Gesamtbild (38) zusammengesetzt werden, das zur weiteren Verarbeitung ausgegeben wird,
**dadurch gekennzeichnet,**
**dass** die Auslese-Sequenz eines Teilbilds (78, 90, 94, T₁, T₂) anhand einer aus einem vorhergehenden Teilbild (78, 90, 94, T₁, T₂) ermittelten (E₁₁, E₁₂, E₁₃, E₂₁) Eigenschaft des Gegenstands (28, 56, 68) gesteuert wird.

2. Verfahren nach Anspruch 1,
**dadurch gekennzeichnet,**
**dass** das Ermitteln (E₁₁, E₁₂, E₁₃, E₂₁) der Eigenschaften aus Werten eines Teilbilds (32, 34, 36, 48, 78, 90, 94, T₁, T₂) und das Auslesen (A₁₁, A₁₂, A₁₃, A₂₁) eines folgenden Teilbilds (32, 34, 36, 48, 78, 90, 94, T₁, T₂) zumindest teilweise gleichzeitig erfolgt.

3. Verfahren nach Anspruch 1 oder 2,
**dadurch gekennzeichnet,**
**dass** sich die Teilbilder (32, 34, 36, 48, 78, 90, 94, T₁, T₂) nicht überdecken.

4. Verfahren nach einem der vorhergehenden Ansprüche,
**dadurch gekennzeichnet,**
**dass** die Teilbilder (32, 34, 36, 48, 78, 90, 94, T₁, T₂) aus mindestens zwei nicht zusammenhängenden Pixelbereichen zusammengesetzt sind.

5. Verfahren nach einem der vorhergehenden Ansprüche,
**dadurch gekennzeichnet,**
**dass** die Teilbilder (32, 34, 36, 48, 78) jeweils aus einer Anzahl von vollständig ausgelesenen Pixelzeilen (30, 48a; 48b, 48c, 48d) des Bildsensors (6) zusammengesetzt werden.

6. Verfahren nach einem der Ansprüche 1 bis 4,
**dadurch gekennzeichnet,**
**dass** die Teilbilder (90, 94, T₁, T₂) jeweils aus einer Anzahl von nur teilweise ausgelesenen Pixelzeilen des Bildsensors (6) zusammengesetzt werden.

7. Verfahren nach Anspruch 5 oder 6,
**dadurch gekennzeichnet,**
**dass** die Pixelzeilen (30, 48a, 48b, 48c, 48d) eines Teilbilds (32, 34, 36, 48, 78, 90, 94, T₁, T₂) jeweils durch eine vorgegebene Anzahl nicht auszulesender Pixelzeilen voneinander beabstandet sind.

8. Verfahren nach einem der Ansprüche 5 bis 7,
**dadurch gekennzeichnet,**
**dass** die Auslese-Sequenz eines auf ein erstes Teilbild (32, 48, 78, 90, 94, T₁, T₂) abfolgend ausgelesenen zweiten Teilbilds (34, 36, 48, 78, 90, 94, T₁, T₂) um eine Pixelzeile zum ersten Teilbild (32, 48, 78, 90, 94, T₁, T₂) versetzt wird.

9. Verfahren nach einem der vorhergehenden Ansprüche,
**dadurch gekennzeichnet,**
**dass** die Teilbilder (32, 34, 36, 48, 78, 90, 94, T₁, T₂) in einer solchen Zeit ausgelesen (A₁₁, A₁₂, A₁₃, A₂₁) werden, dass mindestens 10 Gesamtbilder (38) pro Sekunde ausgegeben werden können.

10. Verfahren nach einem der vorhergehenden Ansprüche,
**dadurch gekennzeichnet,**
**dass** ein Teilbild (32, 34, 36, 48, 78, 90, 94, T₁, T₂) aus nur so vielen Pixel (26) besteht, dass das Auslesen (A₁₁, A₁₂, A₁₃, A₂₁) eines Teilbilds (32, 34, 36, 48, 78, 90, 94, T₁, T₂) und das Ermitteln (E₁₁, E₁₂, E₁₃, E₂₁) der Eigenschaft jeweils innerhalb von 10 ms erfolgen kann.

11. Verfahren nach einem der vorhergehenden Ansprüche,
**dadurch gekennzeichnet,**
**dass** als Eigenschaft mindestens ein Parameter des Gegenstands (28, 56, 68) aus der Gruppe Position, Abmessung, Form, Veränderung der Form, Bewegungsgeschwindigkeit, Farbe, Helligkeit, Lichtreflexionsverhalten des Gegenstands (28, 56, 68)
ermittelt (E₁₁, E₁₂, E₁₃, E₂₁) wird.

12. Verfahren nach einem der vorhergehenden Ansprüche,
**dadurch gekennzeichnet,**
**dass** die Eigenschaft mit Hilfe einer Eigenschaftsvorgabe ermittelt (E₁₁, E₁₂, E₁₃, E₂₁) wird.

13. Verfahren nach Anspruch 12,
**dadurch gekennzeichnet,**
**dass** die Eigenschaftsvorgabe aus mindestens einer bereits ermittelten Eigenschaft abgeleitet wird.

14. Verfahren nach einem der vorhergehenden Ansprüche,
**dadurch gekennzeichnet,**
**dass** mit mindestens einem aus der Eigenschaft des Gegenstands (28, 56, 68,) gewonnenen Wert ein Gerät (22) gesteuert wird.

15. Verfahren nach Anspruch 14,
**dadurch gekennzeichnet,**
**dass** ein Gerät (22) aus der Gruppe Lasergerät zur operativen Behandlung eines Auges, Ausrichtungsvorrichtung zur Positionierung des Bildsensors (6) relativ zur Lage des Gegenstands, Lichteinstrahlungsvorrichtung, Vorrichtung zur Steuerung eines elektrischen Parameters, Roboter,
gesteuert wird.

16. Verfahren nach einem der vorhergehenden Ansprüche,
**dadurch gekennzeichnet,**
**dass** ein Geräteparameter in Verbindung mit mindestens einem aus der Eigenschaft des Gegenstands (28, 56, 68) gewonnenen Wert geregelt wird.

17. Verfahren nach einem der vorhergehenden Ansprüche,
**dadurch gekennzeichnet,**
**dass** die Veränderung der Eigenschaft des Gegenstands (28, 56, 68) durch eine Abfolge von Gesamtbildern (38) dargestellt wird.

## Claims

1. Method for detecting a characteristic of at least one object (28, 56, 68), in which
a. optical radiation influenced by the object (28, 56, 68) is fed to an image sensor (6),
b. at least two different partial images (32, 34, 36, 48, 78, 90, 94) consisting of pixels (26) are read out (A₁₁, A₁₂, A₁₃, A₂₁) in succession from the image sensor (6), and values assigned to the pixels (26) are fed to an evaluation unit (10),
c. the characteristic of the object (28, 56, 68) is determined (E₁₁, E₁₂, E₁₃, E₂₁) in each case from the values that are assigned to a partial image (32, 34, 36, 48, 78, 90, 94, T₁, T₂), and
d. the partial images (32, 34, 36, 48, 78, 90, 94, T₁, T₂) are combined to form a total image (38) that is output for further processing, **characterized in that** the read-out sequence of a partial image (78, 90, 94, T₁, T₂) is controlled with the aid of a characteristic of the object (28, 56, 68) determined (E₁₁, E₁₂, E₁₃, E₂₁) from a preceding partial image (78, 90, 94, T₁, T₂).

2. Method according to Claim 1, **characterized in that** the determination (E₁₁, E₁₂, E₁₃, E₂₁) of the characteristics from values of a partial image (32, 34, 36, 48, 78, 90, 94, T₁, T₂) is performed simultaneously at least in part with the reading-out (A₁₁, A₁₂, A₁₃, A₂₁) of a following partial image (32, 34, 36, 48, 78, 90, 94, T₁, T₂).

3. Method according to Claim 1 or 2, **characterized in that** the partial images (32, 34, 36, 48, 78, 90, 94, T₁, T₂) do not overlap one another.

4. Method according to one of the preceding claims, **characterized in that** the partial images (32, 34, 36, 48, 78, 90, 94, T₁, T₂) are assembled from at least two disconnected pixel areas.

5. Method according to one of the preceding claims, **characterized in that** the partial images (32, 34, 36, 48, 78) are assembled in each case from a number of completely read-out pixel rows (30, 48a, 48b, 48c, 48d) of the image sensor (6).

6. Method according to one of Claims 1 to 4, **characterized in that** the partial images (90, 94, T₁, T₂) are assembled in each case from a number of only partially read-out pixel rows of the image sensor (6).

7. Method according to Claim 5 or 6, **characterized in that** the pixel rows (30, 48a, 48b, 48c, 48d) of a partial image (32, 34, 36, 48, 78, 90, 94, T₁, T₂) are spaced apart from one another in each case by a prescribed number of pixel rows that are not to be read out.

8. Method according to one of Claims 5 to 7, **characterized in that** the read-out sequence of a second partial image (34, 36, 48, 78, 90, 94, T₁, T₂) read out following on from a first partial image (32, 48, 78, 90, 94, T₁, T₂) is offset from the first partial image (32, 48, 78, 90, 94, T₁, T₂) by a pixel row.

9. Method according to one of the preceding claims, **characterized in that** the partial images (32, 34, 36, 48, 78, 90, 94, T₁, T₂) are read out (A₁₁, A₁₂, A₁₃, A₂₁) in such a time that at least 10 total images (38) per second can be output.

10. Method according to one of the preceding claims, **characterized in that** a partial image (32, 34, 36, 48, 78, 90, 94, T₁, T₂) consists of only so many pixels (26) that the reading-out (A₁₁, A₁₂, A₁₃, A₂₁) of a partial image (32, 34, 36, 48, 78, 90, 94, T₁, T₂) and the determination (E₁₁, E₁₂, E₁₃, E₂₁) of the characteristic can be performed within 10 ms in each case.

11. Method according to one of the preceding claims, **characterized in that** at least one parameter of the object (28, 56, 68) from the group of
position, dimension, shape, change in shape, speed of movement, color, brightness, optical reflection behavior of the object (28, 56, 68)
is determined (E₁₁, E₁₂, E₁₃, E₂₁) as the characteristic.

12. Method according to one of the preceding claims, **characterized in that** the characteristic is determined (E₁₁, E₁₂, E₁₃, E₂₁) with the aid of a characteristic specification.

13. Method according to Claim 12, **characterized in that** the characteristic specification is derived from at least one already determined characteristic.

14. Method according to one of the preceding claims, **characterized in that** an appliance (22) is controlled with the aid of at least one value obtained from the characteristic of the object (28, 56, 68).

15. Method according to Claim 14,
**characterized in that** an appliance (22) from the group of
a laser appliance for operating on an eye, an aligning apparatus for positioning the image sensor (6) relative to the position of the object, an optical irradiation apparatus, an apparatus for controlling an electrical parameter, a robot
is controlled.

16. Method according to one of the preceding claims, **characterized in that** an appliance parameter is regulated in conjunction with at least one value obtained from the characteristic of the object (28, 56, 68).

17. Method according to one of the preceding claims, **characterized in that** the variation in the characteristic of the object (28, 56, 68) is displayed by a sequence of total images (38).

## Revendications

1. Procédé pour enregistrer une propriété d'au moins un objet (28, 56, 68) dans lequel
a. un rayonnement lumineux influencé par l'objet (28, 56, 68) est acheminé vers un capteur d'images (6),
b. au moins deux images partielles différentes (32, 34, 36, 48, 78, 90, 94) constituées de pixels (26) sont lues successivement (A₁₁, A₁₂, A₁₃, A₂₁) à partir du capteur d'images (6) et des valeurs attribuées aux pixels sont acheminées vers une unité d'exploitation (10),
c. à partir des valeurs qui sont attribuées à une image partielle (32, 34, 36, 48, 78, 90, 94, T₁, T₂), on détermine respectivement la propriété (E₁₁, E₁₂, E₁₃, E₂₁) de l'objet (28, 56, 68),
d. les images partielles (32, 34, 36, 48, 78, 90, 94, T₁, T₂) sont assemblées pour former une image entière (38) qui est fournie pour un traitement ultérieur,
**caractérisé en ce que** la séquence de lecture d'une image partielle (78, 90, 94, T₁, T₂) est commandée à l'aide d'une propriété (E₁₁, E₁₂, E₁₃, E₂₁) de l'objet (28, 56, 68) déterminée à partir d'une image partielle (78, 90, 94, T₁, T₂) précédente.

2. Procédé selon la revendication 1, **caractérisé en ce que** la détermination des propriétés (E₁₁, E₁₂, E₁₃, E₂₁) à partir de valeurs d'une image partielle (32, 34, 36, 48, 78, 90, 94, T₁, T₂) et la lecture (A₁₁, A₁₂, A₁₃, A₂₁) d'une image partielle suivante (32, 34, 36, 48, 78, 90, 94, T₁, T₂) s'effectuent au moins partiellement en simultanéité.

3. Procédé selon la revendication 1 ou 2, **caractérisé en ce que** les images partielles (32, 34, 36, 48, 78, 90, 94, T₁, T₂) ne se chevauchent pas.

4. Procédé selon une des revendications précédentes, **caractérisé en ce que** les images partielles (32, 34, 36, 48, 78, 90, 94, T₁, T₂) sont assemblées à partir d'au moins deux domaines de pixels non liés.

5. Procédé selon une des revendications précédentes, **caractérisé en ce que** les images partielles (32, 34, 36, 48, 78) sont respectivement assemblées à partir d'un certain nombre de lignes de pixels du capteur d'images (6) entièrement lues (30, 48a, 48b, 48c, 48d).

6. Procédé selon une des revendications 1 à 4, **caractérisé en ce que** les images partielles (90, 94, T₁, T₂) sont respectivement assemblées à partir d'un certain nombre de lignes de pixels du capteur d'images (6) lues partiellement seulement.

7. Procédé selon la revendication 5 ou 6, **caractérisé en ce que** les lignes de pixels (30, 48a, 48b, 48c, 48d) d'une image partielle (32, 34, 36, 48, 78, 90, 94, T₁, T₂) sont respectivement distantes les unes des autres d'un nombre défini de lignes de pixels qu'il n'est pas nécessaire de lire.

8. Procédé selon une des revendications 5 à 7, **caractérisé en ce que** la séquence de lecture d'une deuxième image partielle lue (34, 36, 48, 78, 90, 94, T₁, T₂) suivant une première image partielle (32, 48, 78, 90, 94, T₁, T₂), est décalée d'une ligne de pixels par rapport à la première image partielle (32, 48, 78, 90, 94, T₁, T₂).

9. Procédé selon une des revendications précédentes, **caractérisé en ce que** les images partielles (32, 34, 36, 48, 78, 90, 94, T₁, T₂) sont lues dans un temps (A₁₁, A₁₂, A₁₃, A₂₁) permettant de fournir au moins 10 images entières (38) par seconde.

10. Procédé selon une des revendications précédentes, **caractérisé en ce qu'**une image partielle (32, 34, 36, 48, 78, 90, 94, T₁, T₂) n'est constituée que d'un nombre de pixels (26) permettant respectivement la lecture (A₁₁, A₁₂, A₁₃, A₂₁) d'une image partielle (32, 34, 36, 48, 78, 90, 94, T₁, T₂) et la détermination de la propriété (E₁₁, E₁₂, E₁₃, E₂₁) dans un délai de 10ms.

11. Procédé selon une des revendications précédentes, **caractérisé en ce que** la propriété concerne la détermination (E₁₁, E₁₂, E₁₃, E₂₁) d'au moins un paramètre de l'objet (28, 56, 68) appartenant au groupe de la position, la dimension, la forme, la modification de la forme, la vitesse de mouvement, la couleur, la clarté, le comportement de réflexion de la lumière par l'objet (28, 56, 68).

12. Procédé selon une des revendications précédentes, **caractérisé en ce que** la propriété est déterminée (E_{11,} E₁₂, E₁₃, E₂₁) avec l'aide d'une indication de la propriété.

13. Procédé selon la revendication 12, **caractérisé en ce que** l'indication de la propriété est déduite à partir d'au moins une propriété déjà déterminée.

14. Procédé selon une des revendications précédentes, **caractérisé en ce qu'**on commande un appareil (22) avec au moins une valeur obtenue à partir de la propriété de l'objet (28, 56, 68).

15. Procédé selon la revendication 14, **caractérisé en ce qu'**on commande un appareil (22) du groupe suivant : appareil laser pour le traitement par opération d'un oeil, dispositif d'orientation pour le positionnement du capteur d'images (6) par rapport à la situation de l'objet, 1 dispositif d'irradiation par la lumière, dispositif pour la commande d'un paramètre électrique, robot.

16. Procédé selon une des revendications précédentes, **caractérisé en ce qu'**on règle un paramètre de l'appareil en liaison avec au moins une valeur obtenue à partir de la propriété de l'objet (28, 56, 68).

17. Procédé selon une des revendications précédentes, **caractérisé en ce que** la modification de la propriété de l'objet (28, 56, 68) est représentée par une succession d'images entières (38).
